# EUROPEAN PATENT APPLICATION

(11) **EP 4 667 404 A1**
(43) Date of publication of application: **24.12.2025**
(21) Application number: 24183302.9
(22) Date of filing: 20.06.2024
(51) Int. Cl.: B65H 63/00, B65H 67/06, H04W 4/029, H04W 4/80, H04W 4/021, G06Q 90/00

(54) **TRACK AND TRACE KIT, A SYSTEM AND A METHOD THEREOF**

(71) Applicant: Rieter AG, 8406 Winterthur (CH)
(72) Inventor: SCHÖNHOLZER, André, 8500 Frauenfeld (CH); VEEH, Jan, 80807 München (DE)
(74) Representative: Rieter

(57) **Abstract**

The present invention concerns a track and trace kit (200) and a system for a spinning mill. Said track and trace kit (200) comprises a sliver can (21) configured to transport sliver at least identify via a label (71) and a control device (81) configured to at least control said label (71) and to delimitate an area (99) in which the sliver can (21) is placed.

## Description

### Technical field of the invention

The present invention relates to a track and trace kit for a spinning mill, a track and trace system and a method thereof. More particularly, the present invention is dedicated, but not exclusively, to a sliver can in a spinning mill.

### Technological background

In recent years, the global textile industry has faced growing scrutiny for its environmental impact. As a result, fibre traceability has emerged as a crucial aspect in addressing these concerns and promoting sustainable sourcing throughout the supply chain for example.

Indeed, in recent years, it has become difficult to reduce the cotton waste or fiber waste and to optimize its marge without having a closer look to the fiber preparation process within a spinning mill. Since some spinning mills may comprise different machines from different machine suppliers, it is difficult, if not impossible to find out which machine is outperforming and which is not, and to understand the reasons of the fiber quality.

### Summary of the invention

In order to achieve this objective, the present invention may provide, according to an aspect of the invention, a track and trace kit for a spinning mill comprising a:
- Sliver can: said sliver can being configured to transport sliver in said spinning mill, and comprising a label such as to at least identify said sliver can;
- Control device: said control device being configured to at least control said label of said sliver can and to delimitate an area in which the sliver can is placed.

Thus, this arrangement allows tracking and tracing the sliver can such as to know where the sliver can comes from and where should be placed in order to guarantee the reproducibility of the fiber quality.

According to an embodiment, said label is a barcode, a matrix code, and/or a RFID tag.

Thus, this arrangement allows at least identifying said sliver can and knowing its origine.

According to an embodiment, said control device is a barcode scanner, a matrix code scanner, and/or a RFID reader.

Thus, this arrangement allows at least identifying said sliver can and knowing its origine.

According to an embodiment, said control device comprises a floor cover configured to be attached to another floor cover and an antenna configured to cooperate with said floor cover.

Thus, this arrangement allows the delimitation of said area in which the sliver can is placed and the identification of said sliver can.

According to an embodiment, said control device is configured to authorize the location of said sliver can in the delimitated area, preferably, said control device comprises an authorization element configured to authorize the location of said sliver can in the delimitated area and/or said floor cover comprises an authorization element configured to authorize the location of said sliver can in the delimitated area.

Thus, this arrangement allows an automation such as to guarantee the reproducibility of the fiber quality.

According to an embodiment, said track and trace kit comprises a control unit configured to place said sliver can via said label within the delimitated area.

According to an embodiment, said control unit is configured to selects between several control device input signals and to forward the selected control device input to a central unit.

Thus, those arrangements allow a control of the sliver can's placement.

In order to achieve this objective, the present invention may provide, according to an aspect of the invention, a track and trace system for a spinning mill comprising a:
- Sliver can: said sliver can being configured to transport sliver in said spinning mill, and comprising a label according to one of the preceding claim 1 to 7;
- spinning preparatory machine: said spinning preparatory machine comprising a central unit and a control device according to an embodiment of the present invention and a control unit according to an embodiment of the present invention.

Thus, this arrangement allows tracking and tracing the sliver can such as to know where the sliver can comes from and where should be placed in order to guarantee the reproducibility of the fiber quality.

According to an embodiment, said spinning preparatory machine comprises a draw frame, machine for calendaring, and/or a roving frame.

Thus, this arrangement allows tracking and tracing the sliver can between the different machines.

In order to achieve this objective, the present invention may provide, according to an aspect of the invention, a track and trace method for a spinning mill implemented by said Track and trace kit according to an aspect of the present invention or by said track and trace system according to an aspect of the invention, comprising:
- Delimitation of an area; said area is delimitated such as to place said labelled sliver can;
- Identification of said labelled sliver can.

Thus, this arrangement allows tracking and tracing the sliver can such as to know where the sliver can comes from and where should be placed in order to guarantee the reproducibility of the fiber quality.

According to an embodiment, said track and trace method comprises an authorization of the location of said labelled sliver can within said delimitated area.

Thus, this arrangement allows an automation such as to guarantee the reproducibility of the fiber quality.

According to an embodiment, said track and trace method comprises a displacement indication such as to displace said labelled sliver can in another delimitated area.

Thus, those arrangements allow a control of the sliver can's placement.

According to an embodiment, said track and trace method comprises a timestamp for said delimitation, identification, authorization and/or displacement indication.

Thus, this arrangement allows tracking and tracing the sliver can such as to know where the sliver can comes from and where should be placed in order to guarantee the reproducibility of the fiber quality.

### Brief description of the drawings

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
- Figure 1 shows a carding machine **17** and a sliver can **21** according to an embodiment of the invention;
- Figure 2 illustrates a control device **81** comprising a floor cover **83,** which may be attached to another floor cover **83,** and an antenna **84** configured to cooperate with said floor cover **83** and to scan said RFID tag **71** according to an embodiment of the invention;
- Figure 3 represents said control device **81** comprising a barcode scanner **81** and/or a matrix code scanner **81** configured to scan said barcode **71** and/or said matrix code **71** and to delimitate an area **99** according to an embodiment of the invention.

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

### Detailed description

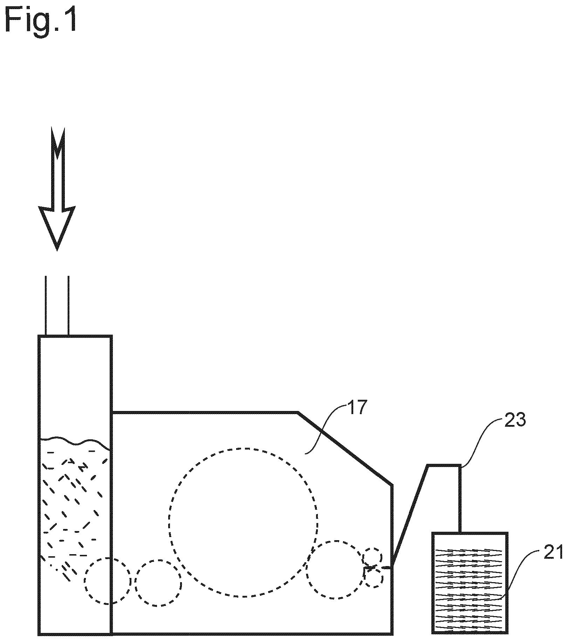

FIG. 1 shows a carding machine **17,** a sliver can **21** and can coiler. A coiling plate (not represented) may comprise a sliver channel with an inlet and an outlet for fiber sliver. The fiber bundle passes through a web funnel and may be discharged in the form of a card sliver in said sliver can **21.** In order to track and trace said sliver can **21** within a spinning mill, the applicant may propose, according to an aspect of the invention, a track and trace kit **200.**

Said track and trace kit **200** may comprise said sliver can **21** configured to transport sliver **23** in said spinning mill with a label **71** such as to at least identify said sliver can **21** and a control device **81** configured to at least control said label **71** of said sliver can **21.** According to another embodiment, said track and trace kit **200** may comprise said label **71,** which may be disposed on or cooperate with said sliver can **21** and said control device **81.**

Indeed, since the present invention may be proposed in a form of a kit, the user may be free to choose his or her own sliver can or to at least identify his or her own sliver can **21** with said label **71** of said kit **200,** which may be a barcode **71,** a matrix code **71,** and/or a RFID tag **71.** Thus, the user may at least identify said sliver can **21** and may know its origine, in other words, to know where said labeled sliver can **21** may come from which carding machine.

The present invention may be used as an Add-On with an existing spinning preparatory machine **18** such as to form a track and trace system **100** according to an aspect of the present invention. Said spinning preparatory machine **18** may be a draw frame **18,** machine for calendaring **18,** and/or a roving frame **18** for instance, such as to track and trace the sliver can **21,** rather the labeled sliver can **21** between the different machines in a spinning mill.

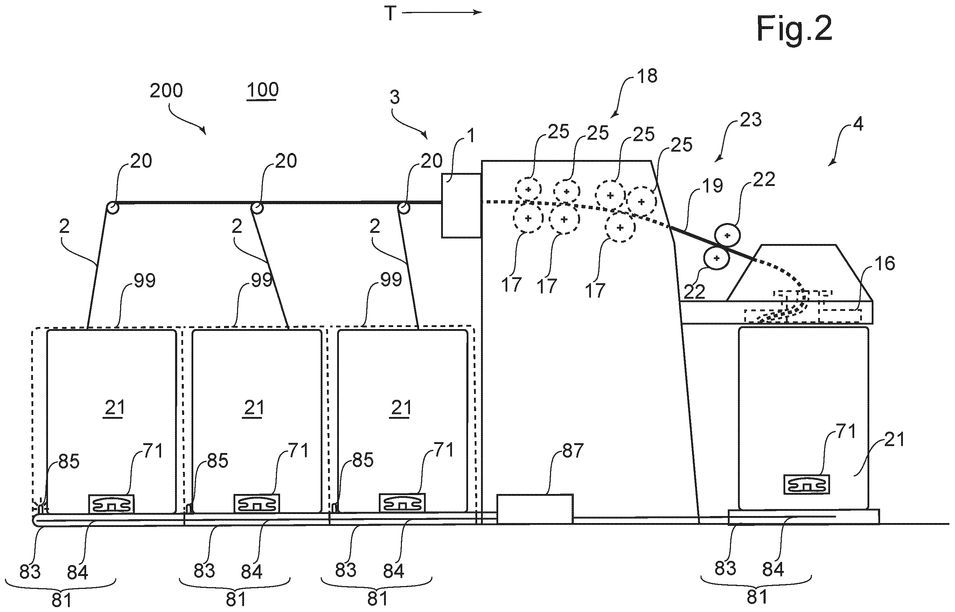

Said control device **81,** previously mentioned, may be fixed on said spinning preparatory machine **18,** in case of said kit **200** or may be comprised by said spinning preparatory machine **18** in case of said system **100.** In both cases, said control device **81** may delimitate an area **99** in which the sliver can **21** may be placed. According to an embodiment, said control device **81** may comprise a floor cover **83** configured to represent said delimitated area **99** and to be attached to another floor cover **83,** and an antenna **84** configured to cooperate with said floor cover **83** and to scan said RFID tag **71,** as illustrated in Fig. 2.

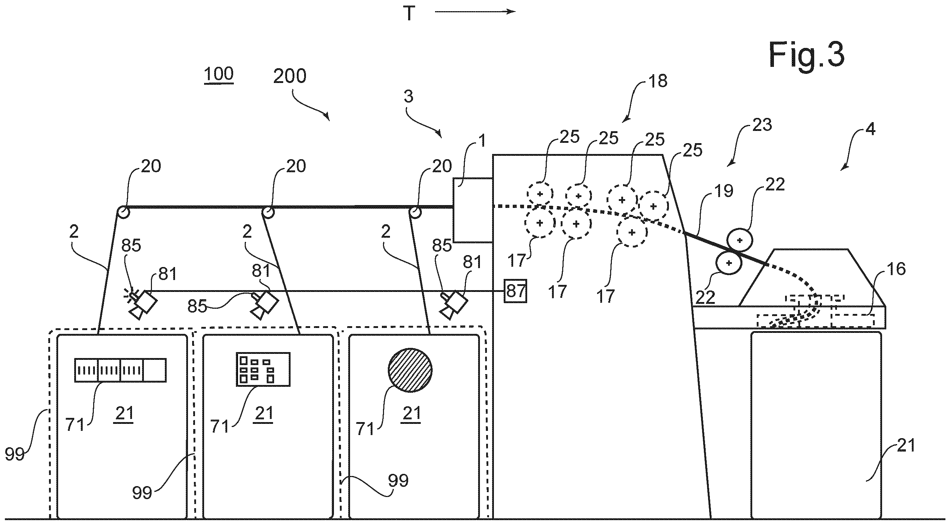

According to the embodiment of fig. 3, said control device **81** may comprise a barcode scanner **81** and/or a matrix code scanner **81** configured to scan said barcode **71** and/or said matrix code **71** and to delimitate said area **99.** Said delimitation may be achieved by adjusting the transmitting power of said control device **81** or by limiting the focus of said control device **81** within a range.

In order to illustrate the situation, let's take the following example: a user may bring a set of labeled sliver cans **21** to a draw frame **18,** as shown in Figs. 2 & 3.

During the operation of the draw frame **18,** the fiber slivers 2 are taken from one or more sliver cans **21** and are fed via corresponding deflection devices **20** and a sliver guide **1** to a drafting unit of the draw frame **18.**

The drafting unit or each of the drafting units typically includes three or more roller assemblies, each of which may feature at least one bottom roller **17** and one or more top rollers **25.** The desired drafting of the fiber assembly consisting of the individual fiber slivers **2** finally arises from the fact that the individual cylindrical bottom rollers **17,** and thus also the individual top rollers **25** in contact with them have a progressively greater peripheral speed in the shown transport direction T of the draw frame **18.** While other solutions are also possible, in the embodiments shown, the drafting unit has bottom rollers **17** in the form of an entry cylinder, a medium cylinder and an output cylinder arranged one after the other. The individual cylinders are in turn in contact with one or more opposing cylinders formed by the top rollers **25,** such that the fiber assembly may be guided by clamping. Given the peripheral speeds of the specified cylinder increasing in the transport direction, the drafting and thus the fiber assembly may be finally made uniform.

The drafted fiber material **19** may be typically conducted through a condenser (not shown), which may be preferably formed as a web funnel and brings about a condensing of the fiber web **19.** Subsequently, the fiber web **19** arrives in the area of a draw-off device **23,** which typically may comprise a multiple number of rotatable or at least partially driven draw-off elements, for example in the form of two draw-off disks **22** contacting the fiber web **19** from two sides. Through a correspondingly high conveying speed, the draw-off device **23** brings about a further draft of the fiber web **19.** Finally, the fiber web **19** may be typically fed to a rotating rotary plate 16 and may be stored by this in the form of a loop in a provided sliver can **21,** which may be labeled.

Said control device **81** may delimitate a sliver can slot as said area **99,** where said labeled sliver can **21** should be placed. An identification of said labelled sliver can **21** may occur, in order to know where said labeled sliver can **21** may come from. According to an embodiment said labeled sliver can **21** may be placed in each sliver can slot as long as said sliver can slot may be an area **99** delimitated by said control device **81.**

A central unit, comprised by said spinning preparatory machine **18,** may associate said labeled sliver can **21** with said delimitated area **99** and a timestamp for said delimitation and/or said identification. The user may take note of the different timestamps, more precisely he or she may take note of which labeled sliver can **21** and in which said delimitated area **99** said labeled sliver can **21** has been placed and try to reproduce the result such as to guarantee the reproducibility of the fiber quality, since he or she may know which labeled sliver can **21** may come from which carding machine for example.

Otherwise, according to another embodiment, said central unit may indicate, where said labeled sliver can **21** should be placed and in which sliver can slot, i.e. in which delimitated area **99.** In this case, said central unit may communicate with said control device **81,** and said control device **81** may authorize the location of said sliver can **21** in said delimitated area **99** or may indicate a displacement of said labeled sliver can **21** in another said delimitated area **99,** whilst saving a timestamp for said delimitation, identification, authorization and/or displacement indication.

Said authorization may occur via an authorization element **85,** like an LED or a sound signal for instance, comprised by said control device **81** and/or said floor cover **83** may comprise said authorization element **85** such as to authorize the location of said sliver can **21** in the delimitated area **99** and to allow an automation in order to guarantee the reproducibility of the fiber quality. Said control device **81** of the other delimitated area **99** may transmit the identification of the sliver can **21** and said control unit **87** may select between several control device input signals of the different control device **81** and may forward the selected control device **81** input to said central unit, such as to control the sliver can's placement.

As it may be construed from the description, the present invention may allow tracking and tracing said sliver can **21** such as to know where said sliver can **21** comes from and where should be placed in order to guarantee the reproducibility of the fiber quality.

## Claims

1. Track and trace kit (200) for a spinning mill comprising a:
- Sliver can (21): said sliver can (21) being configured to transport sliver (23) in said spinning mill, and comprising a label (71) such as to at least identify said sliver can (21);
- Control device (81): said control device (81) being configured to at least control said label (71) of said sliver can (21) and to delimitate an area (99) in which the sliver can (21) is placed.

2. Track and trace kit (200) according to claim 1, wherein said label (71) is a barcode (71), a matrix code (71), and/or a RFID tag (71).

3. Track and trace kit (200) according to claim 1 or 2, wherein said control device (81) is a barcode scanner (81), a matrix code scanner (81), and/or a RFID reader (81).

4. Track and trace kit (200) according to one of the preceding claims 1 to 3, wherein said control device (81) comprises a floor cover (83) configured to be attached to another floor cover (83) and an antenna (84) configured to cooperate with said floor cover (83).

5. Track and trace kit (200) according to one of the preceding claims 1 to 4, wherein said control device (81) is configured to authorize the location of said sliver can (21) in the delimitated area (99), preferably, said control device (81) comprises an authorization element (85) configured to authorize the location of said sliver can (21) in the delimitated area (99) and/or said floor cover (83) comprises an authorization element (85) configured to authorize the location of said sliver can (21) in the delimitated area (99).

6. Track and trace kit (200) according to one of the preceding claims 1 to 5, which comprises a control unit (87) configured to place said sliver can (21) via said label (71) within the delimitated area (99).

7. Track and trace kit (200) according to one of the preceding claims 1 to 6, wherein said control unit (87) is configured to selects between several control device (81) input signals and to forward the selected control device (81) input to a central unit.

8. Track and trace system (100) for a spinning mill comprising a:
- Sliver can (21): said sliver can (21) being configured to transport sliver in said spinning mill, and comprising a label (71) according to one of the preceding claim 1 to 7;
- spinning preparatory machine (18): said spinning preparatory machine (18) comprising a central unit and a control device (81) according to one of the preceding claim 1 to 7 and a control unit (87) according to one of the preceding claim 1 to 7.

9. Track and trace system (100) according to claim 8, wherein said spinning preparatory machine (18) comprises a draw frame (18), machine for calendaring, and/or a roving frame.

10. Track and trace method for a spinning mill implemented by said Track and trace kit (200) according to one of the preceding claims 1 to 7 or by said Track and trace system (100) according to one of the preceding claims 8 to 9, comprising:
- Delimitation of an area (99); said area (99) is delimitated such as to place said labelled sliver can (21);
- Identification of said labelled sliver can (21).

11. Track and trace method according to claim 10, which comprises an authorization of the location of said labelled sliver can (21) within said delimitated area (99).

12. Track and trace method according to claim 11, which comprises a displacement indication such as to displace said labelled sliver can (21) in another delimitated area (99).

13. Track and trace method according to one of the preceding claims 10 to 12, which comprises a timestamp for said delimitation, identification, authorization and/or displacement indication.
